(19) **Europäisches Patentamt**
**European Patent Office**
**Office européen des brevets**

(11) Veröffentlichungsnummer : **0 495 223 B1**

(12) **EUROPÄISCHE PATENTSCHRIFT**

(45) Veröffentlichungstag der Patentschrift :
**09.03.94 Patentblatt 94/10**

(51) Int. Cl.$^5$ : **C02F 1/70, C22B 15/00**

(21) Anmeldenummer : **91121770.1**

(22) Anmeldetag : **19.12.91**

(54) **Verfahren zur Abtrennung von edleren Metallionen als Eisen aus Prozess- und Abwässern.**

(30) Priorität : **12.01.91 DE 4100741**

(43) Veröffentlichungstag der Anmeldung :
**22.07.92 Patentblatt 92/30**

(45) Bekanntmachung des Hinweises auf die
Patenterteilung :
**09.03.94 Patentblatt 94/10**

(84) Benannte Vertragsstaaten :
**BE DE FR GB IT NL SE**

(56) Entgegenhaltungen :
**EP-A- 0 316 785**
**E. PIETSCH 'GMELINS HANDBUCH DER
ANORGANISCHEN CHEMIE, ACHTE AUF-
LAGE, EISEN, TEIL A, ABTEILUNG I' 1933 ,
VERLAG CHEMIE , BERLIN (DE)**

(73) Patentinhaber : **BASF Aktiengesellschaft
Carl-Bosch-Strasse 38
D-67063 Ludwigshafen (DE)**

(72) Erfinder : **Habermann, Wolfgang
Gonsenheimer Spiess 8
W-6500 Mainz 1 (DE)**
Erfinder : **Haag, Armin, Dr.
Friedrich-Ebert-Strasse 27
W-6945 Hirschberg (DE)**
Erfinder : **Kochanek, Wolfgang, Dr.
Freiheitsstrasse 57
W-6730 Neustadt (DE)**

## Beschreibung

Verfahren zur Abtrennung von edleren Metallionen als Eisen aus Prozeß- und Abwässern

Die vorliegende Erfindung betrifft ein Verfahren zur Entfernung von edleren Metallionen als Eisen, insbesondere Kupfer, aus sauren Prozeß- und Abwässern, durch Reduktion mit Eisenpulvern.

Bei der Rückgewinnung von Kupfer aus sauren Abwässern setzt man in der Technik als Verfahren die Reduktion von Kupferionen mit metallischem Eisen ein. Der Prozeß beruht auf der Umsetzung von Kupferionen durch Eisen gemäß der Gleichung

$$Cu^{++} + Fe^\circ \rightarrow Cu^\circ + Fe^{++}$$

wobei anstelle von Kupferionen Eisenionen in das Abwasser gelangen. Als Nebenreaktion kommt es zur Bildung von Wasserstoff

$$2H_3O^+ + Fe^\circ \rightarrow Fe^{++} + H_2 + 2H_2O$$

Das Reduktionsmittel Eisen wird als Material mit großer Oberfläche z.B. in Form von Pulvern, feinen Granulaten, Spänen und Schwamm eingesetzt. Probleme treten bei der Reduktion dadurch auf, daß

- es nicht möglich ist, das Kupfer abriebfest sowie formstabil auf dem Eisen abzuscheiden, da es zur Bildung von feinteiligem Kupferschwamm oder kupfer-I-oxid-haltigem Kupfer kommt
- der Eisenverbrauch ein vielfaches der stöchiometrisch erforderlichen Menge beträgt, so daß weitere Abwasserbelastungen entstehen können und
- feinteiliges zum Teil kolloidales oder komplexgebundenes Kupfer anfällt, das durch Filtration oft nicht abtrennbar ist.

Hinzu kommt, daß durch die Verwendung des technisch erhältlichen Eisens neben Wasserstoff, auch Schwefel- und Phosphorwasserstoff im Abgas anfällt. Beide Abgase führen zu einer erheblichen Gefährdung der Umwelt.

Die schwierige Abtrennung des Kupfers bei diesen Verfahrenstechniken muß unter Stickstoff erfolgen, damit kein reduziertes Kupfer in Gegenwart von Sauerstoff und Abwesenheit von metallischen Eisen wieder in Lösung geht.

Trotz dieser Vorkehrungen ist es nicht möglich die Metallgehalte im Abwasser auf diesem Wege unter 1 ppm abzusenken, da die Bildung kolloidaler Metalle eine quantitative Abtrennung unmöglich macht.

Aufgabe der vorliegenden Erfindung war es, die Metallionenreduktion mit Eisenpulvern in der Weise durchzuführen, daß bei der Reduktion keine feinteiligen kolloidalen Metallpulver anfallen und damit die zu reduzierenden Metallionenrestgehalte im Abwasser auf $\leqq$ 1 ppm abzusenken.

Es wurde nun gefunden, daß man die Nachteile der bisherigen Verfahrenstechniken vermeidet, wenn man die Reduktion mit Carbonyleisenpulvern, die mindestens 99 Gew.-% Eisen enthalten in Gegenwart eines Inertgases z.B. Stickstoff durchführt.

Entscheident für den vollständigen Ablauf der Reduktion ist, daß die zum Einsatz kommenden Carbonyleisenpulver vor der Zementation durch eine thermische Behandlung mit Wasserstoff weitgehend von Carbiden und Nitriden befreit werden, da Carbide und Nitride

- die Bildung feinteiliger und kolloidaler Metalle bei der Reaktion begünstigen,
- bei Anwesenheit von Sauerstoff die Oxidation der bereits reduzierten Metalle katalytisch beschleunigen und
- in den Grenzschichten durch Ammoniakbildung die Bildung löslicher Metallkomplexe erhöhen.

Die Spezifikation des Eisens für die Reduktion der Metallionen muß deshalb den folgenden Anforderungen entsprechen

- Eisengehalt : $\geqq$ 99,5 Gew.-%
- Kohlenstoffgehalt : $\leqq$ 0,05 Gew.-%
- Stickstoffgehalt : $\leqq$ 0,01 Gew.-%
- Schwefelgehalt : $\leqq$ 0,0001 Gew.-%
- Phosphorgehalt : $\leqq$ 0,0001 Gew.-%
- Fremdmetallgehalt : $\leqq$ 0,001 Gew.-%

Als Eisenpulver die diesem Qualitätsanforderungen entsprechen kommen bevorzugt Carbonyleisenpulver in Betracht, die bei +350°C bis 450°C etwa 12 bis 24 h im Wasserstoffstrom thermisch gereinigt wurden.

Die Korngröße der verwendeten Eisenpulver kann 0,5 bis 1000 µm betragen. Bevorzugt setzt man Carbonyleisenpulver mit einer Korngröße von 20 bis 150 µm ein, da es bei Verwendung feinteiliger Eisenpulver zu feinteiligen Metallabscheidungen kommen kann und bei Verwendung von zu groben Metallpulvern die notwendige Reaktionszeit beträchtlich erhöht wird.

Der pH-Wert bei der Reduktion sollte $\leqq$ 4 sein, vorzugsweise arbeitet man im pH-Bereich zwischen 0 und 2. Die Temperatur bei der Reduktion mit Eisenpulvern kann zwischen +10°C und +100°C liegen. Als günstig hat sich ein Temperaturbereich von +50°C bis +80°C erwiesen. Zur Erfassung des Endpunktes der Reduktion wird das Potential der reduzierten Metallionen mit Hilfe einer Redoxelektrode gegen eine Referenzelektrode gemessen. Als Redoxelektroden werden Platin-, Platinmetall- oder Goldelektroden und als Referenzelektroden Silber/Silberchlorid-, Thalamid- oder Kalomelelektroden verwendet. Das Potential am Ende der Reduktion sollte negativer als das Redoxpotential des abzuscheidenden Metalles sein. Dieser Zustand wird dadurch erreicht, daß ein stöchiometrischer Überschuß an Eisen eingesetzt wird. Bei Abwesenheit von Sauerstoff und Eisenüberschuß kommt es bei der Reduktion zu einer oberflächlichen Beladung des reduzierten Metalles mit Wasserstoff, wodurch das Potential des reduzierten Metalles in den Bereich des pH-abhängigen Wasserstoffpotentials abgesenkt wird. Zusätzlich kann das Potential, wenn es erforderlich ist, durch Resteisengehalte im reduzierten Metallniederschlag oder durch Zugabe geringer Anteile ($\leqq$ 10 % bezogen auf den stöchiometrischen Eisenbedarf) an Aluminium- oder Magnesiumpulver erniedrigt werden. Neben diesen Methoden kann die kathodische Polarisation zur Potentialverminderung des reduzierten Metallniederschlages angewendet werden. In diesem Falle setzt man in das Reaktionsgefäß eine inerte Kathode aus z.B. Kupfer, Nickel oder einem Edelstahl ein, die gegen eine durch ein Diaphragma oder eine Kationenaustauschermembran separierte, platinmetallbeschichtete Titan-Anode polarisiert ist.

Im Falle der Kupferreduktion müssen bei Abwesenheit von Chlorid, gemäß der Gleichung

$$Cu^{++} + 2e \rightarrow Cu° \qquad E° = + 0{,}345 \text{ V}$$

Potentiallagen von < +0,34 V eingehalten werden, während bei Anwesenheit von Chlorid gemäß der Gleichung

$$CuCl_2^- + e \rightarrow Cu° + 2Cl^- \qquad E° = + 0{,}19 \text{ V}$$

Potentiallagen von < +0,19 V erforderlich sind.

Der Eisenüberschuß bei der Metallionenreduktion kann bezogen auf den stöchiometrischen Bedarf 1,001 : 1 bis 10 : 1 betragen. Bevorzugt arbeitet man mit einem Eisenüberschuß von 1,1 : 1 bis 1,5 : 1, da höhere Eisenüberschüsse zu keiner wesentlichen Verbesserung der Reduktion führen.

Die technische Durchführung der Metallionenabscheidung durch Reduktion mit Carbonyleisenpulvern kann in gerührten Kesseln erfolgen. Als Rührer kommen bevorzugt Impeller- oder Propellerrührer in Betracht. Der Betrieb der Rührkessel kann kontinuierlich oder in Batchfahrweise durchgeführt werden. Anstelle der Rührkessel kann für den kontinuierlichen Betrieb auch eine Mischstrecke, ein Fließbett- oder Wirbelbett-, oder Rohrreaktor verwendet werden.

Die Abtrennung des reduzierten Metalls kann über eine Schwerkraftseparation, z.B. in einem Absetzbecken oder mit Hilfe eines Filterorgans z.B. einer Filterpresse oder eine Filternutsche erfolgen.

Die Abtrennung des reduzierten Metallniederschlags erfolgt unter Inertgasatmosphäre z.B. Stickstoff bei Potentiallagen, die negativer als das Redoxpotential des abzuscheidenden Metalles sind. Die Potentialeinstellung des Metallniederschlages kann durch Eisenüberschuß, eine kathodische Polarisation oder durch Zusatz von Reduktionsmitteln wie z.B. $SO_2$, Al oder Mg erfolgen.

Beispiel 1

In einem Rührkessel mit einem Propellerrührer werden 100 l eines Säureabwassers eingefüllt, welches 23 Gew.-% Schwefelsäure, 3,5 Gew.-% Salzsäure, etwa 0,8 Gew.-% gelöste organische Verbindungen und 2450 ppm Kupfer enthält. Das Abwasser wird unter Stickstoffatmosphäre auf +65°C erwärmt. Bei dieser Temperatur gibt man unter Rühren 325 g Carbonyleisenpulver mit 99,5 Gew.-% Eisen, < 0,01 Gew.-% Kohlenstoff, < 0,01 Gew.-% Stickstoff, 0,0001 Gew.-% Schwefel, < 0,0001 Gew.-% Phosphor und < 0,001 Gew.-% Fremdmetalle hinzu. Dieses Carbonyleisenpulver wurde 24 h bei +380°C durch eine Wasserstoffbehandlung von Carbiden und Nitriden befreit. Der Eisenüberschuß beträgt 1,5 : 1 bezogen auf den theoretischen Bedarf. Die Korngröße des Carbonyleisenpulvers liegt zwischen 30 und 150 μm. Bei einer Rührgeschwindigkeit von 500 UPM werden unter diesen Versuchsbedingungen folgende Ergebnisse erhalten:

| Verweilzeit [min] | Kupferabscheidung [%] | Kupferionenrestkonzentration [ppm] |
|---|---|---|
| 0 | 0 | 2450 |
| 5 | ~ 99,7 | ~ 8 |
| 10 | ~ 99,9 | ~ 1 |
| 15 | ~ 100 | ≤ 0,5 |
| 60 | ~ 100 | ≤ 0,5 |

Das anfallende schwammige Kupfermetall kann durch Sedimentation oder über eine Filternutsche vollständig abgetrennt werden.

Verwendet man unter sonst gleichen Versuchsbedingungen zur Reduktion ein nicht mit Wasserstoff vorbehandeltes Carbonyleisenpulver, mit einer Zusammensetzung von 97,8 Gew.-% Eisen, ~ 1,0 Gew.-Stickstoff, und ~ 1 Gew.-% Kohlenstoff so erhält man folgende Ergebnisse:

| Verweilzeit [min] | Kupferabscheidung [%] | Kupferionenrestkonzentration [ppm] |
|---|---|---|
| 0 | 0 | 2450 |
| 5 | 95,5 | 110 |
| 10 | ~ 98,0 | 47 |
| 20 | ~ 99,5 | 13 |
| 60 | ~ 99,5 | 12 |

Das reduzierte Kupfer fällt sehr feinteilig an, so daß bei der Abtrennung durch Filtration eine Filterhilfsschicht aus Diatomenerde erforderlich ist.

Führt man die Reduktion nicht unter Inertgasatmosphäre sondern in Gegenwart von Luft durch, so erhält man unter sonst gleichen Bedingungen mit den mit Wasserstoff behandelten und unbehandelten Eisenpulvern folgende Ergebnisse:

| Eisenpulver Typ | Verweilzeit [min] | Kupferabscheidung [%] | Kupferionenrestkonzentration [ppm] |
|---|---|---|---|
| H$_2$-behandelt | 0 | 0 | 2450 |
| " | 10 | 99,9 | ~ 2 |
| " | 30 | 99,9 | ~ 1 |
| " | 60 | 98,2 | 45 |
| unbehandelt | 0 | 0 | 2450 |
| " | 10 | 94,1 | 145 |
| " | 30 | 96,7 | 80 |
| " | 60 | 87,6 | 305 |

Beispiel 2

In einem Rührkessel wie in Beispiel 1 werden 100 l eines Säureabwasser eingefüllt, welches etwa 15 Gew.-

4

% Salzsäure, 4,5 Gew.-% Schwefelsäure und 2100 ppm, Kupfer enthält. Dem Abwasser setzt man bei +65°C den 1,5 fachen Carbonyleisenüberschuß, bezogen auf den theoretischen Bedarf, hinzu und reduziert die Kupferionen unter Stickstoffatmosphäre. Das verwendete Carbonyleisenpulver wurde wie in Beispiel 1 mit Wasserstoff behandelt und hatte die gleiche Zusammensetzung und Korngröße. Die Ergebnisse der Reduktion sind in der nachfolgenden Tabelle dargestellt:

| Verweilzeit [min] | Kupferabscheidung [%] | Kupferionenrestkonzentration [ppm] |
|---|---|---|
| 0 | 0 | 2100 |
| 10 | ~ 99,9 | ~ 1 |
| 30 | ~ 100 | ~ 0,5 |
| 60 | ~ 100 | ≤ 0,5 |
| 90 | ~ 100 | ≤ 0,5 |

Das anfallende schwammige Kupfer läßt sich durch eine Sedimentation oder über eine Filterpresse vollständig abtrennen.

Beispiel 3

In einem Rührkessel wie in Beispiel 1 werden 100 l eines Säureabwassers eingefüllt, welches eine etwa 7,2 Gew.-%ige Schwefelsäure mit 130 ppm Silberionen enthält. Bei +65°C wird das Abwasser mit dem 1,3fachen Überschuß eines in Wasserstoffatomosphäre reduzierten Carbonyleisenpulvers versetzt. Die Reduktion erfolgt unter Stickstoff. Das Carbonyleisenpulver hatte die gleiche Zusammensetzung und Korngröße wie das reduzierte Pulver in Beispiel 1. Es werden folgende Ergebnisse erhalten:

| Verweilzeit [min] | Silberabscheidung [%] | Silberrestkonzentration [ppm] |
|---|---|---|
| 0 | 0 | 130 |
| 10 | ~ 100 | < 1 |
| 30 | ~ 100 | < 0,5 |

Das anfallende schwammige Silber läßt sich über eine Filternutsche vollständig abtrennen.

**Patentansprüche**

1. Verfahren zur Abtrennung von edleren Metallionen als Eisen, insbesondere Kupferionen, aus sauren Prozeß- und Abwässern durch Reduktion mit Eisenpulvern, dadurch gekennzeichnet, daß man die Reduktion mit Carbonyleisenpulver, das mindestens 99 Gew.-% Eisen enthält, in Gegenwart eines Inertgases durchführt.

2. Verfahren nach Anspruch 1, dadurch gekennzeichnet, daß das Carbonyleisenpulver vor der Reduktion durch eine thermische Behandlung mit Wasserstoff von Carbiden und Nitriden befreit wird.

3. Verfahren nach Anspruch 1 und 2, dadurch gekennzeichnet, daß die Korngröße des Carbonyleisenpulvers 0,5 bis 1000 µm vorzugsweise 20 bis 150 µm beträgt.

4. Verfahren nach Anspruch 1 bis 3, dadurch gekennzeichnet, daß die Reduktion bei pH-Werten ≦ 4 vorzugsweise zwischen 0 und 2 durchgeführt wird.

5. Verfahren nach Anspruch 1 bis 4, dadurch gekennzeichnet, daß die Reduktion bei Temperaturen von +10°C, bis +100°C vorzugsweise zwischen +50 und +80°C durchgeführt wird.

6. Verfahren nach Anspruch 1 bis 6, dadurch gekennzeichnet, daß die Carbonyleisendosierung über eine Redoxpotentialmessung derart gesteuert wird, daß das Potential während und am Ende der Reaktion negativer als das Redoxpotential des abscheidenden Metalls in dem entsprechenden Prozeß- oder Abwasser ist.

7. Verfahren nach Anspruch 1 bis 6, dadurch gekennzeichnet, daß das Verhältnis Metall im Abwasser zu aufzuwendenden Carbonyleisenpulver 1 : 1,001 bis 1 : 10, vorzugsweise 1 : 1,1 bis 1 : 1,5 beträgt.

## Claims

1. A process for removing nobler metal ions than iron, especially copper ions, from acidic process and waste waters by reduction with iron powders, which comprises carrying out the reduction with carbonyl iron powder which contains not less than 99% by weight of iron in the presence of an inert gas.

2. A process as claimed in claim 1, wherein the carbonyl iron powder is, before the reduction, subjected to a thermal treatment with hydrogen to remove carbides and nitrides.

3. A process as claimed in claim 1 or 2, wherein the particle size of the carbonyl iron powder is from 0.5 to 1000 $\mu$m, preferably from 20 to 150 $\mu$m.

4. A process as claimed in claim 1 or 2 or 3, wherein the reduction is carried out at pH $\leqq$ 4, preferably from 0 to 2.

5. A process as claimed in claim 1 or 2 or 3 or 4, wherein the reduction is carried out at from +10°C to +100°C, preferably from +50 to +80°C.

6. A process as claimed in claim 1 or 2 or 3 or 4 or 5, wherein the metering of the carbonyl iron is controlled by redox potential measurement in such a way that the potential during and at the end of the reaction is more negative than the redox potential of the metal being deposited in the relevant process or waste water.

7. A process as claimed in claim 1 or 2 or 3 or 4 or 5 or 6, wherein the ratio of metal in the waste water to the carbonyl iron powder to be used is from 1 : 1.001 to 1 : 10, preferably from 1 : 1.1 to 1 : 1.5.

## Revendications

1. Procédé de séparation d'ions de métaux plus nobles que le fer, plus particulièrement d'ions cuivre, à partir d'eaux de traitement et d'eaux résiduaires, par réduction avec des poudres de fer, caractérisé en ce que l'on entreprend la réduction avec une poudre de fer-carbonyle, qui contient au moins 99% en poids de fer, en présence d'un gaz inerte.

2. Procédé suivant la revendication 1, caractérisé en ce que la poudre de fercarbonyle est débarrassée, avant la réduction, des carbures et des nitrures par un traitement thermique avec de l'hydrogène.

3. Procédé suivant les revendications 1 et 2, caractérisé en ce que le calibre des particules de la poudre de fercarbonyle varie de 0,5 à 1000 mym, de préférence 20 à 150 mym.

4. Procédé suivant les revendications 1 à 3, caractérisé en ce que l'on entreprend la réduction à des valeurs de pH égales ou inférieures à 4, de préférence comprises entre 0 et 2.

5. Procédé suivant les revendications 1 à 4, caractérisé en ce que l'on entreprend la réduction à des températures de +10 à +100°C, de préférence comprises entre +50 et +80°C.

6. Procédé suivant les revendications 1 à 6, caractérisé en ce que le dosage du fercarbonyle est commandé par la mesure du potentiel redox en une manière telle que le potentiel au cours de et à la fin de la réaction soit plus négatif que le potentiel redox du métal qui se sépare dans l'eau de traitement ou l'eau résiduaire concernée.

7.  Procédé suivant la revendications 1 à 6, caractérisé en ce que le rapport du métal dans l'eau résiduaire à la poudre de fercarbonyle à mettre en oeuvre varie de 1:1,001 à 1:10, de préférence 1:1,1 à 1:1,5.